(19) Europäisches Patentamt / European Patent Office / Office européen des brevets

(11) **EP 3 736 418 B1**

(12) **FASCICULE DE BREVET EUROPEEN**

(45) Date de publication et mention de la délivrance du brevet:
**29.03.2023 Bulletin 2023/13**

(21) Numéro de dépôt: **20172434.1**

(22) Date de dépôt: **30.04.2020**

(51) Classification Internationale des Brevets (IPC):
**F01N 3/021** *(2006.01)*    **F01N 3/10** *(2006.01)*
**F01N 11/00** *(2006.01)*    **F01N 13/00** *(2010.01)*

(52) Classification Coopérative des Brevets (CPC):
**F01N 11/00; F01N 13/008;** F01N 3/021; F01N 3/10;
F01N 2560/00; F01N 2900/0601; F01N 2900/08;
F01N 2900/10; F01N 2900/1402; F01N 2900/16;
Y02A 50/20; Y02T 10/40

(54) **PROCÉDÉ DE DÉTERMINATION DES ÉMISSIONS POLLUANTES D'UN VÉHICULE AU MOYEN D'UN SYSTÈME EMBARQUÉ**

VERFAHREN ZUR BESTIMMUNG DER SCHADSTOFFEMISSIONEN EINES FAHRZEUGS MITHILFE EINES BORDSYSTEMS

METHOD FOR DETERMINING THE POLLUTING EMISSIONS OF A VEHICLE BY MEANS OF AN ON-BOARD SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.05.2019 FR 1904858**

(43) Date de publication de la demande:
**11.11.2020 Bulletin 2020/46**

(73) Titulaire: **IFP Energies nouvelles**
**92852 Rueil-Malmaison Cedex (FR)**

(72) Inventeurs:
• **RODRIGUEZ RODRIGUEZ, Sol Selene**
**92852 RUEIL-MALMAISON CEDEX (FR)**
• **THIBAULT, Laurent**
**92852 RUEIL-MALMAISON CEDEX (FR)**
• **DEGEILH, Philippe**
**92852 RUEIL-MALMAISON CEDEX (FR)**

• **KERMANI, Joseph**
**92852 RUEIL-MALMAISON CEDEX (FR)**
• **FROBERT, Arnaud**
**92852 RUEIL-MALMAISON CEDEX (FR)**

(56) Documents cités:
DE-A1-102007 042 748    FR-A1- 3 059 358
US-A1- 2019 102 509    US-A1- 2019 138 669

• DR-ING DAVID BLANCO-RODRIGUEZ ET AL: "Modellbasiertes Werkzeug für die Emissionskalibrierung moderner Diesel-Antriebsstränge", MTZ - MOTORTECHNISCHE ZEITSCHRIFT, SPRINGER, vol. 77, no. 10, 1 octobre 2016 (2016-10-01), pages 64-69, XP001597151, ISSN: 0024-8525, DOI: 10.1007/S35146-016-0106-4

## Description

### Domaine technique

La présente invention concerne le domaine de la détermination des émissions polluantes d'un véhicule.

Les émissions réelles des véhicules particuliers sont une source d'inquiétude pour le grand public, ainsi que pour le législateur. En effet, les dernières affaires (« Dieselgate » et ses développements) ont jeté un discrédit malvenu sur l'industrie automobile en démontrant que certains constructeurs automobiles n'étaient pas honnêtes dans leur gestion des émissions polluantes. Il a été prouvé que des réglages différents étaient utilisés lors de l'homologation et en usage réel.

### Technique antérieure

Pour répondre à ces inquiétudes et éviter d'autres scandales, la norme d'homologation a changé, en la rendant plus proche de la réalité (cycle d'homologation WLTC : « Worldwide harmonized Light vehicles Test Procedures » ou procédure d'essai mondiale harmonisée pour les voitures particulières et véhicules utilitaires légers) et en comparant systématiquement les émissions obtenues dans des conditions laboratoire et dans des conditions réelles (« Real Driving Emission » RDE). A cette fin, ont été développés des systèmes de mesure embarquables sur un véhicule particulier et / ou sur un véhicule de transport. Ces appareils, dénommés "PEMS" ou « Portable Emission Measurement Systems » sont encombrants, coûteux, fragiles et nécessitent une maintenance importante car ils se doivent de respecter les critères de précision définis par la norme. Ils sont donc uniquement destinés à être utilisés par des spécialistes, soit lors du développement d'un véhicule, soit lors de son homologation.

De plus, il a été développé des méthodes de détermination des émissions polluantes au moyen de modèles et sans capteur. La demande de brevet FR 3049653 (WO17174239) décrit une telle méthode basée sur des modèles. Bien que donnant satisfaction en termes de rapidité, de facilité d'utilisation et de caractère représentatif (les modèles sont construits avec des paramètres du véhicule), le procédé ne peut pas prendre en compte les spécificités de chaque véhicule, notamment liées aux stratégies de contrôle et de calibration, et n'est pas suffisant par lui-même sans aucun système de mesure pour déterminer les émissions polluantes dans ce cadre de surveillance du marché automobile.

Pour pallier ces inconvénients, le demande de brevet dont le numéro de dépôt est FR 18/51.330 concerne un système embarqué de mesure des émissions polluantes d'un véhicule. Le système embarqué de mesure comporte au moins un capteur placé en aval du système de post-traitement et optionnellement un capteur branché sur la prise diagnostic (OBD de l'anglais « On Board Diagnostic ») du véhicule et des moyens informatiques comportant des modèles. Selon l'invention, la détermination des émissions polluantes est basée sur le signal issu du capteur et sur les modèles. L'utilisation des modèles prenant en compte le signal d'au moins un capteur permet d'avoir une détermination précise et représentative des émissions polluantes. De plus, l'utilisation des modèles permet de limiter le nombre de capteurs, ce qui permet de limiter le coût et la maintenance du système embarqué de mesure, et assure une simplicité d'utilisation. Toutefois, ce système embarqué ne permet pas de mesurer une quantité massique des émissions de polluants. En effet, il permet de mesurer une mesure volumique des émissions de polluants. Pour obtenir cette information (quantité massique des émissions de polluants), une mesure de débit en sortie du système de post-traitement est généralement utilisée (comme c'est le cas pour le système PEMS) ce qui rend le système de mesure complexe, encombrant et onéreux.

Le document DE 102007042784 A1 décrit un procédé et un dispositif de mesure des gaz d'échappement.

Le document FR 3059358 A1 décrit un procédé de dépollution en NOx dans une ligne d'échappement.

Le document US 2019/0138669 A1 décrit un procédé de détermination des émissions polluantes.

Le document US 2019/0102509 A1. décrit un procédé de détermination de l'empreinte polluante d'une mobilité d'un utilisateur.

Le document : « Dr-ig David Blanco-Rodriguez et al. : « Modellbasiertes Werkzeug für die Emissionskalibrierung moderner Diesel-Antriebsstrânge », MTZ - MOTORTECHNISCHE ZEITSCHRIFT, Springer, vol. 77, no. 10, 52016-10-01), pages 64-69 », décrit des moyens de simulation des émissions de polluantes d'un véhicule.

### Résumé de l'invention

L'invention a pour but de déterminer la quantité (absolue) d'émissions polluantes, de manière simple, peu encombrante et peu onéreuse. Dans ce but, la présente invention concerne un procédé de détermination des émissions polluantes d'un véhicule, utilisant un système embarqué de mesure avec un capteur et un système informatique comportant un modèle générique du véhicule. Le procédé est basé sur l'utilisation de mesures et du modèle pour déterminer la quantité de polluants. Il permet de se passer d'un système de mesure de débit en déterminant la quantité de dioxyde de carbone à partir du modèle générique du véhicule.

L'invention concerne un procédé de détermination des émissions polluantes d'un véhicule ayant parcouru un trajet, ledit véhicule comportant un moteur à combustion interne et un système de post-traitement des gaz d'échappement dudit moteur, ledit procédé mettant en oeuvre un système embarqué de mesure comportant au moins un capteur placé en aval dudit système de post-traitement et un système informatique de détermination desdites émissions polluantes dudit véhicule au moyen de la mise en oeuvre d'un modèle générique dudit véhicule. Pour ce procédé, on met en oeuvre les étapes suivantes :

a) On mesure au moyen dudit capteur une concentration volumique desdites émissions polluantes en aval dudit système de post-traitement ;
b) On estime au moyen dudit modèle générique dudit véhicule la consommation de carburant dudit véhicule ;
c) On détermine le débit massique de dioxyde de carbone en aval dudit système de post-traitement à partir de ladite consommation de carburant estimée dudit moteur ; et
d) On détermine les émissions polluantes en aval dudit système de post-traitement dudit véhicule à partir de ladite mesure de ladite concentration volumique desdites émissions polluantes et dudit débit massique de dioxyde de carbone déterminé.

Selon un mode de réalisation, on détermine les émissions polluantes dudit véhicule à partir d'une formule : $Q_{pol} = R_{mes} \times K \times Q_{CO2\_est}$ avec $Q_{pol}$ la quantité des émissions polluantes, $R_{mes}$ la concentration volumique mesurée desdites émissions polluantes, K un coefficient basé sur le ratio des masses molaires dudit polluant considéré et du dioxyde de carbone, $Q_{CO2\_est}$ le débit massique estimé de dioxyde de carbone.

Conformément à une mise en oeuvre, ledit modèle générique dudit véhicule comporte un modèle du véhicule, un modèle de la motorisation dudit véhicule et un modèle de post-traitement dudit véhicule, ledit modèle de véhicule reliant ladite position et/ou l'altitude et/ou la vitesse dudit véhicule au couple et au régime dudit moteur, ledit modèle de motorisation reliant ledit couple et ledit régime dudit moteur aux émissions de polluants en sortie dudit moteur, et ledit modèle de post-traitement reliant lesdites émissions de polluants en sortie dudit moteur aux émissions de polluants en sortie dudit système de post-traitement.

Selon un aspect, ledit système embarqué comporte un capteur choisi parmi un capteur d'oxydes d'azote NOx, un capteur d'oxyde d'azote NO, un capteur de dioxyde d'azote $NO_2$, un capteur de monoxyde de carbone CO ou de dioxyde de carbone $CO_2$, un capteur de dioxygène $O_2$, un capteur d'hydrocarbures non brûlés, un capteur d'ammoniac $NH_3$, un capteur de particules.

De préférence, ledit système embarqué comporte un capteur branché sur la prise de diagnostic dudit véhicule, ledit au moins un capteur communiquant avec ledit capteur branché sur la prise de diagnostic du véhicule au moyen d'une connexion sans fil.

Avantageusement, ledit système informatique comporte au moins un téléphone intelligent, ledit au moins capteur communiquant avec ledit téléphone intelligent au moyen d'une connexion sans fil.

De manière avantageuse, ledit modèle générique dudit véhicule compris au sein dudit système informatique est enregistré dans un nuage informatique, ledit téléphone intelligent et/ou ledit capteur branché sur la prise de diagnostic dudit véhicule étant configuré pour échanger avec ledit nuage informatique.

Selon une caractéristique, ledit modèle générique dudit véhicule dépend en outre d'au moins un paramètre macroscopique (PAR) dudit véhicule, de préférence on acquiert ledit paramètre macroscopique à partir une base de données (BDD) et/ou au moyen d'une interface avec un utilisateur.

De plus, l'invention concerne un procédé de détermination d'un facteur de conformité dynamique des émissions polluantes d'un véhicule au moyen dudit système embarqué de mesure, dans lequel on réalise les étapes suivantes :

a) On détermine les émissions polluantes dudit véhicule au moyen du procédé de détermination des émissions polluantes selon l'une des caractéristiques précédentes ;
b) On construit un modèle nominal dudit véhicule à partir d'au moins un paramètre macroscopique dudit véhicule au moyen d'un algorithme d'apprentissage automatique, ledit modèle nominal dudit véhicule correspond à un modèle théorique dudit modèle générique dudit véhicule ; et
c) On détermine ledit facteur de conformité dynamique par comparaison d'une valeur nominale des émissions polluantes $O_{pol\ nom}$ déterminée au moyen du modèle nominal et d'une valeur $O_{pol\ mes}$ des émissions polluantes déterminées à partir du procédé de détermination des émissions polluantes selon l'une des caractéristiques précédentes.

L'invention concerne également un procédé de détermination d'un facteur de conformité dynamique des émissions polluantes d'un véhicule au moyen dudit système embarqué de mesure, dans lequel on réalise les étapes suivantes :

a) On détermine les émissions polluantes dudit véhicule au moyen du procédé de détermination des émissions polluantes selon l'une caractéristiques précédentes ;

b) On construit un modèle nominal dudit véhicule à partir d'au moins un paramètre macroscopique dudit véhicule au moyen d'un algorithme d'apprentissage automatique, ledit modèle nominal dudit véhicule correspond à un modèle théorique dudit modèle générique dudit véhicule ; et

c) On construit un modèle calé dudit véhicule à partir desdites émissions polluantes déterminées, de mesures dudit capteur et de données issues dudit modèle générique dudit véhicule au moyen d'un algorithme d'apprentissage automatique, ledit modèle calé dudit véhicule correspond audit modèle générique dudit véhicule calé avec lesdites mesures dudit capteur dudit système embarqué de mesure ;

d) On détermine ledit facteur de conformité dynamique par comparaison d'une estimation des émissions polluantes obtenues pour ledit modèle calé $Q_{pol\ cal}$ dudit véhicule et d'une estimation des émissions polluantes obtenues pour ledit modèle nominal $Q_{pol\ nom}$ dudit véhicule pour ledit trajet parcouru par ledit véhicule.

Conformément à un mode de réalisation, on détermine un facteur de conformité dynamique par comparaison des émissions polluantes mesurées par un autre système de mesure et des émissions polluantes estimées au moyen dudit modèle nominal dudit véhicule pour ledit trajet parcouru par ledit véhicule.

Avantageusement, ledit paramètre macroscopique utilisé pour la construction dudit modèle nominal comporte la norme d'homologation dudit véhicule.

Selon un aspect, on détermine un facteur de conformité dynamique par segment dudit trajet parcouru par ledit véhicule, notamment chaque segment de trajet a une longueur identique, de préférence la longueur dudit segment de trajet est compris entre 1 et 50 km.

Selon une mise en oeuvre de l'invention, ledit procédé comporte une étape supplémentaire de détermination d'un facteur de conformité dynamique pour un cycle de roulage théorique prédéterminé au moyen desdits modèles nominal et calé dudit véhicule.

Conformément à une option de réalisation, on répète ladite étape supplémentaire de détermination dudit facteur de conformité pour une pluralité de cycles de roulage théoriques prédéterminés, et on identifie le cycle de roulage ayant le facteur de conformité dynamique le plus élevé.

En outre, l'invention concerne un procédé d'identification d'au moins un véhicule le plus pollueur, dans lequel on met en oeuvre les étapes suivantes :

a) On met en oeuvre le procédé de détermination d'un facteur de conformité dynamique selon l'une des caractéristiques précédentes pour une pluralité de véhicules ; et

b) On compare le facteur de conformité le plus élevé pour chaque véhicule pour déterminer ledit au moins un véhicule le plus pollueur.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 illustre les étapes du procédé selon un mode de réalisation de l'invention.

La figure 2 illustre un système embarqué de mesures pouvant être utilisé par le procédé selon un mode de réalisation de l'invention.

La figure 3 illustre un système embarqué de mesures pouvant être utilisé par le procédé selon un deuxième mode de réalisation de l'invention.

La figure 4 illustre les étapes du procédé selon un deuxième mode de réalisation de l'invention.

La figure 5 illustre les étapes du procédé selon un troisième mode de réalisation de l'invention.

La figure 6 illustre les étapes de construction d'un modèle calé selon un exemple de réalisation de l'invention.

La figure 7 illustre les émissions polluantes de NOx pour un exemple de trajet parcouru, les émissions polluantes étant déterminées au moyen d'une reconstruction de la quantité massique des émissions polluantes, et d'une valeur des émissions polluantes déterminée pour un comportement nominal du véhicule sur le même trajet.

La figure 8 illustre le facteur de conformité dynamique pour le trajet parcouru de l'exemple de la figure 7 au moyen du procédé de détermination d'un facteur de conformité dynamique selon l'invention.

## Description des modes de réalisation

La présente invention concerne un procédé dé détermination des émissions polluantes d'un véhicule ayant parcouru au moins un trajet.

Le terme « polluants » désigne les oxydes d'azote (NOx), le monoxyde d'azote (NO) et le dioxyde d'azote ($NO_2$) (ces deux derniers polluants peuvent avantageusement être mesurés de manière individuelle), les particules, les monoxydes de carbone (CO), les dioxydes de carbone ($CO_2$), les hydrocarbures non brûlés (HC) et l'ammoniac ($NH_3$). Le procédé selon l'invention permet de déterminer les émissions d'au moins un, avantageusement plusieurs, et de préférence tous, de ces polluants.

Le véhicule comporte un moteur à combustion interne (ci-après désigné par le terme « moteur ») et un système de post-traitement des gaz d'échappement du moteur. Le moteur à combustion interne peut être un moteur essence ou un moteur Diesel ou tout autre type de carburant. Le moteur peut réaliser à lui seul le déplacement du véhicule, ou peut faire partie d'un système de propulsion hybride. Le système de post-traitement permet de traiter les émissions de polluants en sortie du moteur, diminuant ainsi les émissions de polluants du véhicule. Le système de post-traitement peut comporter un catalyseur trois voies pour traiter simultanément les hydrocarbures imbrûlés, le monoxyde de carbone et les oxydes d'azote et/ou un catalyseur d'oxydation pour traiter les hydrocarbures imbrûlés et le monoxyde de carbone, et/ou des catalyseurs DeNOx pour réduire les oxydes d'azote en présence d'oxygène, et/ou différents filtres pour éliminer les particules solides.

Le procédé de détermination des polluants utilise un système embarqué de mesure des émissions polluantes. Le terme « embarqué » indique que le système est monté à bord du véhicule, ce qui inclut également la possibilité d'attacher le système à l'extérieur du véhicule.

Le procédé selon l'invention et le système embarqué de mesure peuvent être utilisés pour les véhicules automobiles. Toutefois, ils peuvent être utilisés dans le domaine du transport routier, le domaine des deux-roues, le domaine ferroviaire, le domaine naval, le domaine aéronautique, le domaine des aéroglisseurs, et le domaine des véhicules amphibies, etc.

Le système embarqué de mesure selon l'invention comporte :

- au moins un capteur placé en sortie du système de post-traitement, le capteur est prévu pour mesurer la concentration volumique d'un gaz ou de particules en sortie du système de post-traitement,
- un système informatique pour déterminer les émissions polluantes, dans ce but, le système informatique exécute un modèle générique du véhicule.

Le modèle générique du véhicule est un modèle représentatif du véhicule configuré pour prendre en compte un signal issu du ou des capteur(s) afin de déterminer des valeurs liées aux émissions polluantes. L'utilisation de modèles permet de déterminer les émissions polluantes tout en limitant le nombre de capteurs, impliquant une réduction du coût et une réduction des phases de maintenance du système de mesure, et de rendre le système embarqué de mesure facilement transportable et adaptable à tous types de véhicules.

Le modèle générique du véhicule peut être de tout type.

Selon un mode de réalisation de l'invention, le modèle générique du véhicule peut comporter trois modèles configurés pouvant être exécutés en cascade (en série) :

- ○ un modèle du véhicule, le modèle de véhicule relie la position et/ou l'altitude et/ou la vitesse du véhicule au couple et au régime du moteur,
- ○ un modèle de motorisation du véhicule, le modèle de motorisation relie le couple et le régime du moteur aux émissions de polluants en sortie du moteur, et
- ○ un modèle de post-traitement, le modèle de post-traitement relie les émissions de polluants en sortie du moteur aux émissions de polluants en sortie du système de post-traitement.

Conformément à un exemple de réalisation de l'invention, le modèle générique du véhicule peut être conforme aux modèles décrits dans la demande de brevet FR 3049653 (WO17174239). Ces trois modèles ne sont pas décrits en détail dans la présente demande. Pour une description détaillée de ces modèles, on peut se reporter à la demande de brevet FR 3049653 (WO17174239), en particulier :

- de page 8, ligne 29 à page 10, ligne 10 pour le modèle de véhicule,

- de page 10, ligne 11 à page 12, ligne 24 pour le modèle de motorisation, et

- de page 12, ligne 26 à page 13, ligne 26 pour le modèle de post-traitement.

Selon un mode de réalisation de l'invention, les trois modèles du système informatique peuvent être dépendants de paramètres macroscopiques du véhicule. Ainsi, les modèles représentent au mieux le véhicule, la motorisation et le système de post-traitement. On appelle paramètre macroscopique, une caractéristique générale relative au véhicule, son moteur ou son système de post-traitement. Il s'agit de paramètres constants pour un véhicule, correspondant à des données du constructeur du véhicule. Le paramètre est dit macroscopique car il est déterminé à l'échelle du véhicule, et il ne s'agit pas de paramètre microscopique qui peut être déterminé, comme par exemple dans la demande de brevet FR2984557 (US 2013/0158967), à l'échelle d'une maille représentant une petite portion de la chambre de combustion.

Les paramètres macroscopiques peuvent être de trois types :

- des paramètres liés à la construction générale du véhicule (par exemple : masse du véhicule, transmission, ...)
- des paramètres liés à la motorisation (par exemple : le type d'injection, la cylindrée, le type de motorisation...), et
- des paramètres liés au système de post-traitement (par exemple : type de post-traitement).

Selon un mode de réalisation de l'invention, on peut acquérir au moins un paramètre macroscopique choisi parmi :

- le type de motorisation (essence, Diesel...),
- le niveau de norme d'homologation (Euro 1, Euro 2, ...) ,
- la cylindrée du moteur,
- le couple maximal et le régime du moteur associé,
- la puissance maximale et le régime du moteur associé,
- la masse du véhicule,
- le type de transmission du véhicule (type et constitution de boîte de vitesse,...),
- le type de système de post-traitement,
- le type du système d'injection,
- l'architecture de la boucle d'air (présence/absence d'une recirculation des gaz brûlés notée EGR, utilisation d'un turbocompresseur, d'une suralimentation...),
- les dimensions des roues, etc.

Selon une variante de réalisation, les paramètres macroscopiques peuvent être obtenus depuis une base de données, qui répertorie les différents véhicules en circulation. Par exemple, les paramètres macroscopiques peuvent être obtenus en indiquant le numéro d'immatriculation du véhicule, la base de données associant le numéro de plaque à sa conception (marque, modèle, motorisation...), et comprenant les paramètres macroscopiques du véhicule. Selon un exemple de réalisation, la base de données peut être enregistrée dans le nuage informatique du système informatique.

Alternativement, les paramètres macroscopiques peuvent être des données constructeurs renseignées par l'utilisateur, en particulier au moyen d'une interface (par exemple un téléphone intelligent ou un système de géolocalisation).

Selon un mode de réalisation de l'invention, le système informatique du système embarqué de mesure peut comprendre un téléphone intelligent (« smartphone »). Un tel téléphone intelligent permet une facilité d'installation dans le véhicule, une adaptabilité, une transportabilité, et une réduction des coûts par rapport à un ordinateur ou un calculateur dédié. De plus, l'utilisation d'un téléphone intelligent permet une utilisation du système par un large public.

Optionnellement, le système embarqué de mesure peut comprendre un capteur qui se branche sur la prise de diagnostic du véhicule (OBD - « On board diagnostic ») et qui peut récupérer des valeurs comme le régime, la température moteur, la température de l'eau ou encore la vitesse véhicule. Dans la suite de la description, ce capteur est nommé capteur OBD. Les moyens informatiques peuvent être alors prévus pour prendre en compte les valeurs obtenues par le capteur OBD. Un tel capteur OBD peut comprendre des moyens de connexion sans fil (par exemple GSM et/ou Wi-Fi et/ou Bluetooth) et/ou un capteur de géolocalisation (par exemple de type GPS). Un tel capteur équipé de moyens de connexion permet un équipement réduit, simple et peu encombrant avec une amélioration de la précision des mesures, il peut aussi permettre de se passer d'un téléphone intelligent.

Afin de faciliter le montage à bord du véhicule (absence de câblage spécifique), le ou les capteur(s) peut(peuvent) communiquer avec le téléphone intelligent ou le capteur OBD au moins d'une connexion sans fil, par exemple du type wifi ou Bluetooth. En variante, une connexion filaire peut être prévue entre le capteur et le téléphone intelligent ou le capteur OBD ou un ordinateur ou un calculateur.

En outre, les trois modèles du système informatique peuvent être enregistrés dans un nuage informatique (« cloud ») ou un service en ligne. Cela permet de limiter la mémoire consommée sur le téléphone intelligent, et d'utiliser des processeurs plus puissants pour exécuter les trois modèles. Pour cette configuration, le téléphone intelligent ou le capteur OBD est configuré pour échanger avec le nuage informatique au moyen d'une connexion internet. Cette configuration utilisant à la fois un téléphone intelligent ou un capteur OBD et un nuage informatique permet une utilisation simplifiée à coût réduit.

Si le téléphone intelligent ou le capteur OBD est équipé avec un système de géolocalisation (GPS), alors le téléphone intelligent ou le capteur OBD peut être configuré en outre pour mesurer la vitesse et/ou l'altitude et/ou la position du véhicule. Ces données de position, vitesse ou altitude peuvent être utilisées dans le modèle générique contenu dans le système informatique, le cas échéant (mode de réalisation avec trois modèles) dans le modèle du véhicule.

En variante (par exemple si le téléphone ou le capteur OBD est dépourvu d'un système de géolocalisation), le système embarqué peut comprendre un capteur de géolocalisation qui communique avec le téléphone intelligent ou le capteur OBD.

Selon un autre aspect, le système informatique peut comprendre en outre un moyen d'affichage des émissions de polluants déterminées au moyen des modèles, afin d'informer l'utilisateur du véhicule des émissions polluantes. Par exemple, le moyen d'affichage peut être l'écran d'un téléphone intelligent.

Alternativement au téléphone intelligent ou au capteur OBD, le système informatique peut comprendre un calculateur ou un ordinateur qui communique avec le ou les capteur(s). Ce calculateur ou ordinateur peut intégrer le modèle générique du véhicule (le cas échéant les trois modèles formant le modèle générique du véhicule).

Selon l'invention, le procédé de détermination des émissions polluantes met en oeuvre les étapes suivantes, qui seront détaillées dans la suite de la description :

    1) Mesure de la concentration volumique des émissions polluantes
    2) Estimation de la consommation de carburant du véhicule
    3) Détermination du débit massique de dioxyde de carbone
    4) Détermination des émissions polluantes

De préférence, les étapes peuvent être mises en oeuvre au moyen du système embarqué de mesure. Avantageusement, les étapes 2 à 4) peuvent être mises en oeuvre par le système informatique du système embarqué de mesure.

### 1) Mesure de la concentration volumique des émissions polluantes

Lors de cette étape, on mesure, pour au moins un type de polluant, au moyen du capteur du système embarqué de mesures, la concentration volumique des émissions polluantes. En effet, le ou les capteur(s) du système de mesure embarquée ne permettent pas de mesurer la quantité massique absolue d'émissions polluantes en aval du système de post-traitement, mais permettent uniquement de mesurer une valeur relative qui est la concentration volumique des émissions polluantes. De préférence, la concentration volumique est exprimée en % ou en parties par million (ppm).

Conformément à une mise en oeuvre de l'invention, le capteur peut être choisi parmi un capteur d'oxydes d'azote NOx, un capteur de monoxyde d'azote NO, un capteur de dioxyde d'azote $NO_2$, un capteur de monoxyde de carbone CO ou de dioxyde de carbone $CO_2$, un capteur de dioxygène $O_2$, un capteur d'hydrocarbures non brûlés, un capteur de particules, ou un capteur d'ammoniac $NH_3$.

De préférence, le système embarqué de mesure peut comporter un capteur de dioxyde de carbone $CO_2$, un capteur de particules, et un capteur de d'oxydes d'azote NOx. Cette configuration permet un bon compromis en termes de coût du système embarqué, et de données mesurées pour une calibration optimale des modèles.

En particulier, le ou les capteur(s) du système embarqué de mesure peuvent être choisis parmi :

    ◦ en ce qui concerne le capteur OBD :

    • Préférentiellement, un capteur capable de lire les informations circulant sur le réseau de communication « OBD » ou On Board Diagnostic du véhicule, par l'intermédiaire de la prise diagnostic ou prise « OBD », située à proximité du tableau de bord du véhicule.

    ◦ en ce qui concerne les capteurs d'oxydes d'azote NOx volumiques :

    • Préférentiellement, un capteur électrochimique,
    • un capteur ultraviolet UV,
    • un capteur infrarouge IR, ou

- un détecteur à Chimie-Luminescence (CLD),

   ◦ en ce qui concerne les capteurs de monoxyde de carbone ou de dioxyde de carbone $CO/CO_2$ volumique :

- Préférentiellement, un capteur infrarouge IR, ou
- un capteur ultraviolet UV,

   ◦ en ce qui concerne les capteurs de dioxygène $O_2$ volumique :

- Préférentiellement, un capteur électrochimique,
- une mesure par diode laser,
- un détecteur Paramagnétique, ou
- un détecteur Magnéto-Pneumatique,

   ◦ en ce qui concerne les capteurs de particules PM/PN/Opacité :

- Préférentiellement, un comptage par diffusion de charge
- Un comptage par mesure des courants induits
- un capteur de particules par accumulation,
- un opacimètre optique (principe de Beer-Lambert ou diffusion de Mie),
- un comptage de noyaux de condensation,
- un comptage par irradiation des particules,
- un détecteur de fumée domestique sur un principe optique ou ionique,
- un détecteur d'atténuation béta BAM (« Beta Atténuation Monitors ») qui mesure la qualité de l'air, ou
- un compteur de particules laser (True Laser Particle Counter) qui mesure la qualité de l'air.

### 2) Estimation de la consommation de carburant du véhicule

Lors de cette étape, on estime au moyen du modèle générique du véhicule la consommation de carburant du véhicule pour le trajet parcouru. Selon le mode de réalisation, pour lequel le modèle générique de véhicule comporte un modèle de véhicule, un modèle de la motorisation, et un modèle de post-traitement, la consommation de carburant du véhicule du véhicule sur le trajet parcouru peut être obtenue en sortie du modèle de motorisation.

### 3) Détermination du débit massique de dioxyde carbone

Lors de cette étape, on détermine le débit massique de dioxyde de carbone $CO_2$ en aval du système de post-traitement pour le trajet parcouru par le véhicule à partir de la consommation de carburant du véhicule estimée à l'étape précédente. Ainsi, aucun système de mesure du débit massique n'est nécessaire pour estimer la quantité de $CO_2$ en sortie du système de post-traitement.
Selon un mode de réalisation, on peut déterminer le débit massique de $CO_2$ par une méthode basée sur une représentation de la combustion, un bilan carbone et en prenant compte du type de carburant.
De préférence, le débit massique de dioxyde de carbone peut être exprimée en masse par rapport au temps, par exemple en g/h.

### 4) Détermination des émissions polluantes

Lors de cette étape, on détermine les émissions polluantes, d'au moins un type de polluant, à partir de la mesure réalisée à l'étape 1) de la concentration volumique des émissions polluantes en aval du système de post-traitement, et à partir du débit massique de dioxyde de carbone en aval du système de post-traitement déterminée à l'étape 3). L'association de la mesure de la concentration volumique et de la valeur estimée du débit massique de dioxyde de carbone, permet une détermination précise des émissions polluantes, sans utiliser de système de mesure de débit en aval du système de post-traitement des émissions de polluants. Ainsi, la détermination des émissions polluantes est précise, simple, peu onéreuse et peu encombrante.
Selon un mode de réalisation de l'invention, on peut déterminer les émissions polluantes du véhicule au moyen d'une formule du type : $Q_{pol} = R_{mes} \times K \times Q_{CO2\_est}$ avec $Q_{pol}$ la quantité des émissions polluantes à déterminer, $R_{mes}$ la concentration volumique mesurée (étape 1)) des émissions polluantes, K un coefficient basé sur le ratio des masses molaires du polluant considéré et du dioxyde de carbone, $Q_{CO2\_est}$ le débit massique estimé de dioxyde de carbone à l'étape 3). Cette formule permet une estimation précise.

Avantageusement, la quantité de polluants émis peut être exprimée en masse par rapport au temps, par exemple en g/h.

Selon un mode de réalisation de l'invention, le procédé peut comporter une étape supplémentaire d'enregistrement et/ou d'affichage de la quantité d'émissions polluantes déterminées. Cet enregistrement et/ou affichage peut être réalisé à bord du véhicule : sur le tableau de bord, sur un dispositif portatif autonome, tel qu'un appareil de géolocalisation (de type GPS), un téléphone portable (de type téléphone intelligent). Il est également possible d'enregistrer et d'afficher cet indicateur sur un site internet, que le conducteur peut consulter postérieurement à sa conduite. De plus, les quantités d'émissions polluantes peuvent être partagées avec un organisme de contrôle des véhicules, de partage de voitures, de locations de voitures, un gestionnaire de flotte de véhicules, etc.

Le procédé de détermination des émissions polluantes selon l'invention présente l'avantage de pouvoir être mis en oeuvre de manière simple (notamment sans spécialiste), peu onéreuse et peu encombrante.

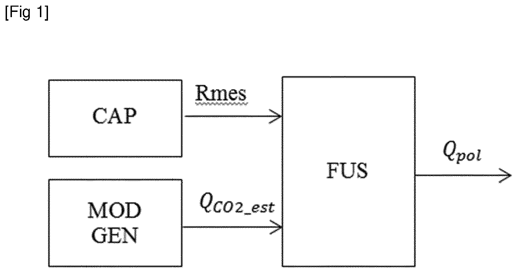

La figure 1 illustre, schématiquement et de manière non limitative, le procédé de détermination des émissions polluantes selon un mode de réalisation de l'invention. Dans un premier temps, on réalise simultanément ou successivement :

- une mesure à l'aide d'un capteur (CAP) d'une concentration volumique Rmes des émissions polluantes en aval du système de post-traitement ; et
- une estimation du débit massique de dioxyde de carbone $Q_{CO2\_est}$ au moyen du modèle générique du véhicule (MOD GEN), et par une étape intermédiaire de détermination de la consommation de carburant du véhicule pendant le trajet parcouru.

Ensuite, la concentration volumique Rmes et le débit massique estimé de dioxyde de carbone $Q_{CO2\_est}$ sont associés (FUS) pour déterminer la quantité d'au moins un type de polluant $Q_{pol}$ émis en sortie du système de post-traitement.

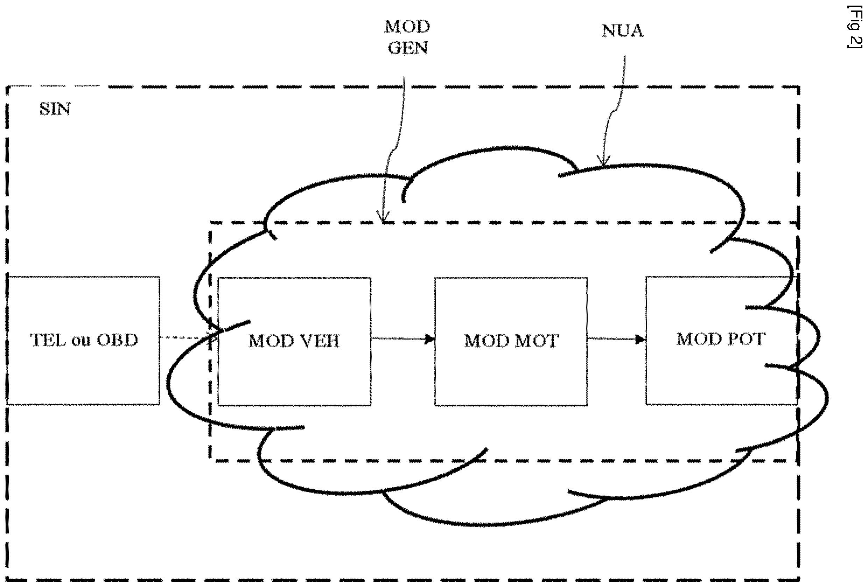

La figure 2 illustre, schématiquement et de manière non limitative, le système informatique d'un système embarqué de mesure permettant de mettre en oeuvre le procédé de détermination des émissions polluantes selon un mode de réalisation de l'invention. Le système embarqué de mesure comporte un système informatique SIN. Le système informatique SIN comporte un téléphone intelligent TEL et/ou un capteur OBD et/ou tout moyen analogue équipé de moyens de connexion sans fil (non représenté) et un nuage informatique NUA.

Sur cette figure, les flèches en traits pointillés correspondent à des connexion sans fil entre les éléments. Le téléphone intelligent TEL et/ou le capteur OBD et/ou tout moyen analogue échange avec le nuage informatique NUA par une connexion sans fil, par exemple une connexion GSM (« Global System for Mobile Communications », système global de communications pour les téléphones portables). Le téléphone intelligent et/ou le capteur OBD transmet un signal au nuage informatique NUA. En particulier, le téléphone intelligent TEL et/ou le capteur OBD peuvent transmettre une mesure de géolocalisation.

Au sein du nuage informatique NUA est stocké le modèle générique du véhicule MOD GEN. Celui-ci est formé de trois modèles : un modèle de véhicule MOD VEH, un modèle de motorisation MOD MOT, et un modèle de post-traitement MOD POT. Le système informatique SIN exécute ces trois modèles les uns après les autres au moyen des données reçues par le téléphone intelligent, pour déterminer les émissions de polluants.

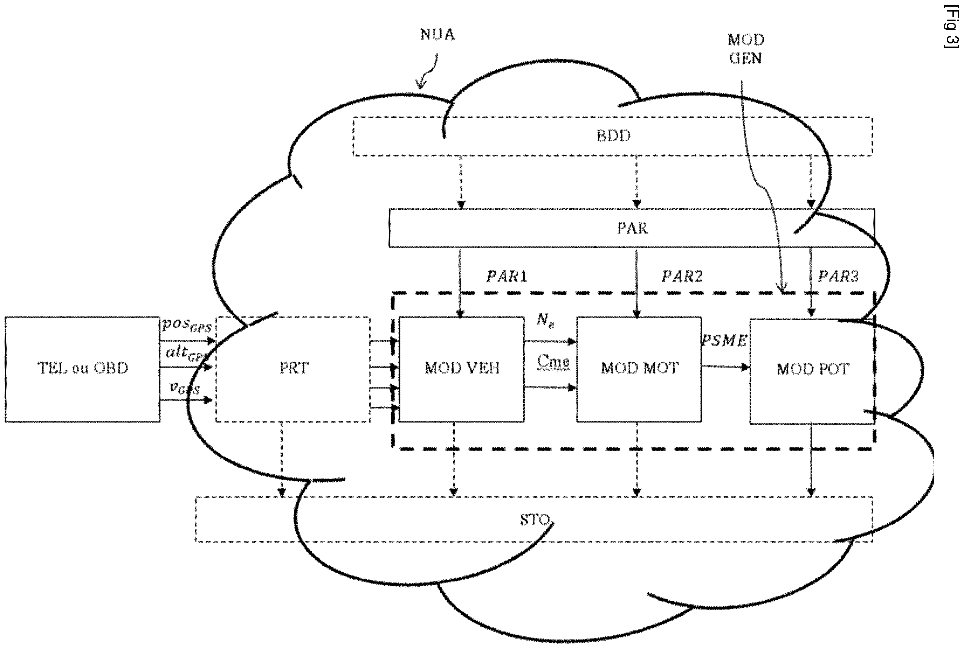

La figure 3 illustre, de manière schématique et non limitative, l'utilisation d'un système informatique d'un système embarqué de mesure de mesure permettant de mettre en oeuvre le procédé de détermination des émissions polluantes selon un mode de réalisation de l'invention. Sur cette figure, les traits pointillés indiquent des éléments facultatifs du procédé.

Préalablement aux étapes du procédé, le modèle générique du véhicule MOD GEN (comportant ici un modèle du véhicule MOD VEH, un modèle du moteur MOD MOT et un modèle du post-traitement MOD POT) est construit. Ces modèles sont construits de préférence à partir de paramètres macroscopiques PAR. De manière facultative, les paramètres macroscopiques PAR peuvent être obtenus depuis une base de données BDD, qui répertorie les différents véhicules en circulation. Par exemple, les paramètres macroscopiques PAR peuvent être obtenus en indiquant le numéro d'immatriculation du véhicule, la base de données BDD associant le numéro de plaque à la conception du véhicule (marque, modèle, motorisation...), et comprenant les paramètres macroscopiques du véhicule. La base de données BDD peut être stockée dans le nuage informatique NUA du système informatique.

Une première série de paramètres macroscopiques PAR1 peut être utilisée pour la construction du modèle du véhicule MOD VEH. Cette première série de paramètres macroscopiques PAR1 peut comprendre les paramètres suivants : la masse du véhicule, la puissance maximale et le régime du moteur associé, la vitesse maximale, le type de transmission (liste non limitative).

Une deuxième série de paramètres macroscopiques PAR2 peut être utilisée pour la construction du modèle du moteur MOD MOT. Cette deuxième série de paramètres macroscopiques PAR2 peut comprendre les paramètres suivants : la cylindrée, le type de motorisation, le couple et la puissance maximums, l'architecture de la boucle d'air, la norme d'homologation du véhicule (liste non limitative).

Une troisième série de paramètres macroscopiques PAR3 peut être utilisée pour la construction du modèle du post-traitement MOD POT. Cette troisième série de paramètres macroscopiques PAR3 peut comprendre les paramètres suivants : la cylindrée, la norme d'homologation du véhicule (liste non limitative).

La première étape peut consister en une étape de mesure de géolocalisation par le téléphone intelligent TEL et/ou le capteur et/ou tout moyen analogue, avantageusement un capteur OBD. Lors de cette étape, on peut mesurer la position $pos_{GPS}$, et/ou l'altitude $alt_{GPS}$ et/ou la vitesse $v_{GPS}$ du véhicule. La prise en compte de l'altitude $alt_{GPS}$ permet notamment de prendre en compte la pente de la route. De préférence, on réalise les trois mesures, de manière à avoir l'information la plus précise possible concernant la géolocalisation du véhicule, car on peut prendre alors en compte le style de conduite, et l'accélération du véhicule. Cette mesure peut être réalisée à l'aide d'un système de géolocalisation, par exemple de type GPS (pour « global positioning system » signifiant géo-positionnement par satellite) ou de type Galileo, ou au moyen d'un téléphone intelligent (« smartphone »), etc. Dans le cas d'un téléphone intelligent, celui-ci peut être équipé d'un système de géolocalisation, alternativement les mesures peuvent être mises en oeuvre par d'autres moyens, notamment par triangulation.

De plus, la première étape comprend la transmission au nuage informatique NUA des mesures de géolocalisation.

La deuxième étape, qui est une étape facultative, est une étape de prétraitement PRT des signaux de mesure. Cette étape permet d'améliorer la qualité des signaux mesurés avant de les utiliser. Cette étape peut notamment être intéressante, si les mesures sont réalisées à partir d'un téléphone intelligent, car les mesures issues d'un tel dispositif peuvent être quelque peu imprécises. Ce prétraitement peut être variable, car il est dépendant de la qualité des données d'entrée. Selon un mode de réalisation de l'invention, le prétraitement PRT peut comprendre un sur-échantillonnage des signaux, puis un filtrage. En sortie de cette étape, on retrouve donc des signaux relatifs à la position $pos_{GPS}$, et/ou l'altitude $alt_{GPS}$ et/ou la vitesse $v_{GPS}$ du véhicule, ces signaux ayant été prétraités.

La troisième étape concerne la détermination du couple et du régime moteur. Cette étape est mise en oeuvre au moyen du modèle du véhicule MOD VEH, qui détermine le couple Cme et le régime Ne du moteur, en fonction des données de géolocalisation : la position $pos_{GPS}$, et/ou l'altitude $alt_{GPS}$ et/ou la vitesse $v_{GPS}$ du véhicule.

La quatrième étape concerne la détermination des émissions polluantes en sortie du moteur, cette étape est mise en oeuvre au moyen du modèle du moteur MOD MOT, qui détermine les émissions de polluants en sortie du moteur PSME, en fonction du couple Cme et du régime Ne du moteur.

La cinquième étape concerne la détermination des émissions de polluants du véhicule, c'est-à-dire en sortie du système de post-traitement. La détermination des émissions de polluants peut être réalisée à chaque instant, par exemple à une fréquence de 1 Hz. De plus, il est également possible de déterminer le cumul des émissions de polluants sur un trajet réalisé. Cette étape est mise en oeuvre au moyen du modèle de post-traitement MOD POT, qui détermine les émissions de polluants en sortie du système de post-traitement, en fonction des émissions de polluants en sortie du moteur PSME.

La sixième étape, facultative, concerne le stockage des données. Une fois que les émissions de polluants du véhicule sont déterminées, celles-ci peuvent être stockées STO (enregistrées), en particulier dans une base de données (différente de la base de données qui comportent les paramètres macroscopiques). Ce stockage STO peut concerner uniquement les émissions de polluants du véhicule, mais peut aussi concerner les données déterminées après chaque étape du procédé : les mesures prétraitées et/ou le couple Cme et le régime Ne du moteur et/ou les émissions de polluants en sortie du moteur PSME. Ces informations permettent un suivi des usages réels et des émissions associées avec une bonne résolution spatiale et temporelle. Le stockage STO peut être contenu dans le nuage informatique NUA.

En outre, l'invention concerne un procédé de détermination d'un facteur de conformité dynamique des émissions polluantes d'un véhicule pour un trajet parcouru. On appelle facteur de conformité dynamique un coefficient traduisant le comportement du véhicule en terme d'émissions polluantes, ce coefficient est le résultat d'une comparaison entre des valeurs théoriques des émissions polluantes et des valeurs mesurées et ou estimées des émissions polluantes. Le procédé de détermination d'un facteur de conformité dynamique des émissions polluantes met en oeuvre le procédé de détermination des émissions polluantes selon l'une quelconque des variantes de l'invention décrites précédemment.

Pour ce procédé, on met en oeuvre les étapes suivantes :

1) Détermination des émissions polluantes

2) Construction d'un modèle nominal

3) (étape facultative) Construction d'un modèle calé

4) Détermination d'un facteur de conformité dynamique

De préférence, les étapes sont mises en oeuvre au moyen du système embarqué de mesure. Avantageusement, les étapes 1) à 4) peuvent être mises en oeuvre par le système informatique du système embarqué de mesure.

## 1) Détermination des émissions polluantes

Lors de cette étape, on détermine, pour au moins un type de polluant, la quantité (massique) d'émissions polluantes pour le trajet parcouru par le véhicule au moyen du procédé de détermination des émissions polluantes selon l'une des variantes, ou l'une des combinaisons de variantes précédemment décrites.

## 2) Construction du modèle nominal

Lors de cette étape, on construit un modèle nominal du véhicule à partir d'au moins un paramètre macroscopique du véhicule au moyen d'un algorithme d'apprentissage automatique. Le modèle nominal du véhicule correspond à un modèle théorique du modèle générique du véhicule pour un fonctionnement idéal du véhicule. En d'autres termes, le modèle nominal du véhicule est représentatif d'un véhicule non défectueux et cohérent avec la norme dont il correspond.
Selon un mode de réalisation de l'invention, le paramètre macroscopique utilisé pour la construction du modèle nominal peut être la norme d'homologation du véhicule (par exemple Euro 4, Euro 5, etc.).
Conformément à une mise en oeuvre de l'invention (pouvant être combinée avec le mode de réalisation précédent), le paramètre macroscopique utilisé pour la construction du modèle nominal peut comprendre des données constructeurs relatives au véhicule.
Ces paramètres macroscopiques peuvent être complétés par des informations concernant l'utilisation du véhicule par le conducteur: par exemple le régime moteur, la charge moteur. Ces informations peuvent le cas échéant être obtenues par le capteur OBD.

## 3) Construction d'un modèle calé

Lors de cette étape facultative (utilisée pour le troisième mode de réalisation de l'invention), on construit un modèle calé du véhicule à partir des émissions polluantes déterminées, de mesures du ou des capteurs du système embarqué, et de données issues du modèle générique du véhicule. Le modèle calé correspond au modèle générique du véhicule calé avec les mesures du capteur. Selon l'invention, la construction du modèle calé est mise en oeuvre au moyen d'un algorithme d'apprentissage automatique (de l'anglais « machine learning »).
Le calage du modèle générique peut être réalisé au niveau de plusieurs paramètres parmi lesquels (liste non exhaustive) :

- les rapports de transmission du véhicule,

- un calage de la dynamique de montée en température du moteur grâce à une température d'eau moteur,

- un calage de la consommation de carburant,

- un calage de la circulation des gaz brûlés, dans le cas d'un moteur à allumage commandé (par exemple à carburant essence),

- la valeur d'oxydes d'azote NOx permet de caler l'amorçage / la mise en température du catalyseur trois voies,

- la valeur d'oxydes d'azote NOx permet de caler les modèles liés aux catalyseurs de réduction des NOx : modèle de stockage NOx dans le cas d'un piège à NOx, modèle d'injection et de stockage de réducteur (le plus souvent ammoniac) dans le cas d'un catalyseur RCS (Réduction catalytique sélective ou SCR),

- la valeur de particules mesurée permet de caler les modèles d'émissions de suies quand le moteur ne dispose pas de système de filtration des gaz d'échappement,

- si le moteur dispose d'un système de filtration des gaz d'échappement, la mesure de particules permet de juger de l'efficacité de filtration.

Selon un exemple de mise en oeuvre de cette étape, la partie du modèle générique du véhicule représentative de l'étagement de la boite de vitesse peut être calée au moyen de données issues du capteur OBD et de signaux de vitesse du moteur. Pour cette application, le modèle générique du véhicule peut être calé grâce à la puissance du véhicule et à la vitesse maximale atteignable. Dans un premier temps, l'étagement de la boite de vitesse peut être déduite par des principes de conception classiques. En utilisant les données issues du modèle générique du véhicule, on peut appliquer alors une méthode de groupement pour identifier les rapports d'étagement et le rapport de boîte de vitesse engagés le long du trajet.

Conformément à un autre exemple de mise en oeuvre de cette étape (pouvant être combinée avec le premier exemple), cette étape peut mettre en oeuvre le calage de l'estimation des oxydes d'azote NOx à l'échappement pour les véhicules diesel. Par exemple, pour estimer les émissions polluantes en aval du système de post-traitement, le modèle de véhicule générique peut s'appuyer sur un modèle des émissions en sortie du moteur et sur un modèle du système de post-traitement. Les quantités physiques internes estimées peuvent être utilisées pour obtenir les émissions en sortie du moteur, qui peuvent être notamment les oxydes d'azote NOx, les particules, le monoxyde de carbone, le dioxyde de carbone. En particulier, les émissions de NOx en sortie du moteur (NOx EO) peuvent dépendre du débit de carburant $Q_{fuel}$, et du ratio de gaz brulés BGR dans le cylindre, et peut s'écrire :

$$\frac{NOx\,EO}{Q_{fuel}} = e^{\alpha*BGR+\beta}$$

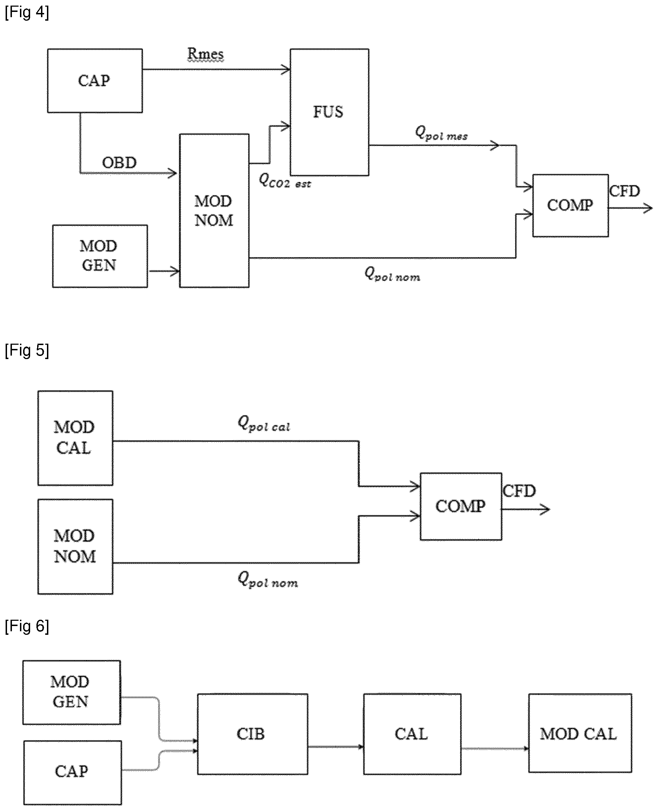

Une librairie de modèle de post-traitement a été développée avec plusieurs sous-modèles (cf. modèle de post-traitement de la demande de brevet FR 3049653 (WO17174239)). Avec ces sous-modèles, il est possible de décrire la plupart des architectures de lignes d'échappement (système de post-traitement) existantes. Les sorties de ces sous-modèles sont les émissions de polluants en sortie du système de post-traitement. Grâce au niveau de polluants requis pour le véhicule et grâce à la fusion de données avec les sous-modèles, ces deux éléments permettent d'améliorer l'estimation des polluants en sortie. Par exemple, la figure 6 représente les étapes mises en oeuvre pour la construction du modèle calé pour les émissions de NOx en aval du système de post-traitement. Au sein du modèle générique MOD GEN, on détermine les émissions de NOx en sortie du moteur (NOx EO), le niveau de gaz brulés dans le cylindre, le rendement moyen générique du système post-traitement (en particulier le système de catalyse SCR, noté SCR Eff generic) et les émissions de NOx en sortie du système de post-traitement (NOX TP). En parallèle, on mesure au moyen d'un capteur CAP les émissions de NOx en sortie du système de post-traitement (NOX TP). A partir des mesures CAP et des données issues du modèle générique MOD GEN, on détermine des cibles CIB pour les grandeurs considérées : une cible des émissions de NOx en sortie du moteur (NOx EO target), une cible du rendement moyen du système de post-traitement (SCR Eff target), et une cible des émissions de NOx en sortie du système de post-traitement (NOx TP target). Ces cibles sont utilisées par un algorithme d'apprentissage de la calibration CAL en déterminant un décalage de la fraction des gaz brulés (BGR offset) et un gain de rendement moyen du système de post traitement. Par exemple, un ratio entre le rendement moyen générique et la cible de rendement moyen permet de caler le modèle. Cette étape permet d'obtenir le modèle calé, qui détermine les émissions de NOx en sortie du moteur (NOx EO), le niveau de gaz brulés dans le cylindre, le rendement moyen du système post-traitement et les émissions de NOx en sortie du système de post-traitement (NOX TP) qui sont cohérents avec les mesures.

Pour ces étapes, on peut mettre en oeuvre les équations suivantes :

$$NOx\,TP\,target = NOx\,TP\,meas$$

$$NOx\,EO\,target = NOx\,EO\,generic + Prop\,EO \times \frac{NOx\,TP\,target - NOx\,TP\,generic}{1 - SCR\,Eff\,generic}$$

$$SCR\,Eff\,target = 1 - \frac{NOx\,TP\,target}{NOx\,EO\,target}$$

$$BGR_{offset} = \frac{1}{\alpha} \times \log\left(\frac{NOx\,EO\,target}{NOx\,EO\,generic}\right) \times K_0$$

où $K_0$ est un coefficient de calage du modèle de NOx, et Prop EO est un coefficient représentatif de la proportion de NOx à attribuer à la sortie du moteur ou à l'écart d'efficacité du système de post-traitement.

## 4) Détermination d'un facteur de conformité dynamique

Lors de cette étape, on détermine un facteur de conformité dynamique par comparaison entre des valeurs théoriques des émissions polluantes et des valeurs mesurées et estimées des émissions polluantes. Le facteur de conformité dynamique est déterminé pour le trajet parcouru par le véhicule. Une valeur élevée du facteur de conformité dynamique traduit un véhicule ayant un comportement (en termes d'émissions polluantes) peu conforme avec un véhicule nominal (non défectueux, sans défaillance) ; au contraire, une valeur faible du facteur de conformité traduit un véhicule ayant un comportement (en termes d'émissions polluantes) conforme du véhicule nominal (non défectueux, sans défaillance). Il est, par conséquent, possible de déterminer un véhicule défaillant au moyen du facteur de conformité dynamique.

De manière avantageuse, un facteur de conformité dynamique peut être déterminé pour chaque type de polluant considéré.

Selon le deuxième mode de réalisation (pour lequel l'étape 3) n'est pas nécessaire), on peut déterminer le facteur de conformité dynamique par comparaison d'une valeur nominale des émissions polluantes déterminée au moyen du modèle nominal et d'une valeur estimée des émissions polluantes, à partir des mesures issues du ou des capteurs du système embarqué, par exemple au moyen du procédé de détermination des émissions polluantes selon l'une quelconque des variantes ou des combinaisons de variantes décrites précédemment.

Pour cette première variante de réalisation, le facteur de conformité dynamique CF peut être calculé, pour au moins un type de polluant, par une formule du type $CF = \dfrac{Q_{pol\,mes}}{Q_{pol\,nom}}$ avec $Q_{pol\,mes}$ la quantité de polluant estimée au moyen du procédé de détermination des émissions polluantes à partir des mesures issues du ou des capteurs du système embarqué et $Q_{pol\,nom}$ la quantité de polluant estimée avec le modèle nominal.

Selon un troisième mode de réalisation (pour lequel l'étape 3) est nécessaire), le facteur de conformité dynamique peut être le résultat d'une comparaison entre des valeurs théoriques des émissions polluantes obtenues avec le modèle nominal et des valeurs mesurées par le ou les capteurs et ou des émissions polluantes estimées avec le modèle calé.

Pour ce troisième mode de réalisation, le facteur de conformité dynamique CF peut être calculé, pour au moins un type de polluant, par une formule du type $CF = \dfrac{Q_{pol\,cal}}{Q_{pol\,nom}}$ avec $Q_{pol\,cal}$ la quantité de polluant estimée avec le modèle calé et $Q_{pol\,nom}$ la quantité de polluant estimée avec le modèle nominal.

Alternativement, on peut déterminer un facteur de conformité dynamique CF par comparaison des valeurs théoriques des émissions polluantes obtenues avec le modèle nominal et des valeurs mesurées avec un autre système de mesure (par exemple avec un système PEMS). Dans ce cas, le facteur de conformité dynamique peut être calculé, pour au moins un type de polluant, par une formule du type : $CF = \dfrac{Q_{pol\,pems}}{Q_{pol\,nom}}$ avec $Q_{pol\,pems}$ la quantité de polluant mesuré avec un autre système de mesure et $Q_{pol\,nom}$ la quantité de polluant estimée avec le modèle nominal.

Conformément à un mode de réalisation, on peut déterminer le facteur de conformité dynamique pour le trajet parcouru.

En variante ou en outre, on peut déterminer le facteur de conformité dynamique pour au moins un segment du trajet parcouru (c'est-à-dire une portion du trajet parcouru). Ainsi, le coefficient de conformité dynamique peut être déterminé pour un unique type de route (en ville, hors des villes, sur autoroute, etc.). De préférence, on peut déterminer le facteur de conformité dynamique pour chaque segment du trajet parcouru, pour déterminer le comportement du véhicule sur l'ensemble du trajet. De manière avantageuse, le segment de trajet peut être de longueur constante, dont la longueur peut être comprise entre 1 et 50 km, et avantageusement en 5 et 25 km, préférentiellement entre 10 et 20 km de manière à être représentatif d'un type de route.

Selon un aspect de l'invention, cette étape peut comporter une sous-étape supplémentaire de détermination d'au moins un facteur de conformité dynamique pour au moins un cycle de roulage théorique au moyen des modèles calé et nominal. Il s'agit de déterminer un facteur de conformité dynamique pour un cycle de roulage non parcouru par le véhicule. Le cycle de roulage théorique peut être un cycle de roulage d'homologation ou un cycle de roulage de test des émissions polluantes (par exemple un cycle RDE de l'anglais « Real Driving Emissions » pouvant être traduit par émissions de conduite réelle). Ainsi, il est possible d'obtenir des informations relatives au comportement polluant du véhicule pour d'autres conditions de roulage.

De manière avantageuse, le procédé peut comprendre la répétition de la sous-étape de détermination d'au moins un facteur de conformité dynamique pour plusieurs cycles de roulage, puis l'identification du cycle de roulage, pour lequel le facteur de conformité est le plus élevé. Ainsi, on peut déterminer le pire cas (c'est-à-dire le pire cycle de roulage), pour lequel le véhicule a un comportement (en termes d'émissions polluantes) éloigné du véhicule nominal (sans défaillance).

De préférence, pour cette mise en oeuvre de l'invention, on peut déterminer le facteur de conformité dynamique selon le troisième mode de réalisation de l'invention, c'est-à-dire par comparaison des émissions polluantes estimées par le modèle calé et par le modèle nominal. L'utilisation du modèle calé avec un trajet parcouru permet d'avoir une estimation représentative du véhicule pour d'autres cycles de roulage (qui n'ont pas été réalisés). Ainsi, grâce au modèle calé sur des valeurs mesurées, le facteur de conformité dynamique est précis même pour un cycle de roulage théorique.

Selon un mode de réalisation de l'invention, le procédé peut comporter une étape supplémentaire d'enregistrement et/ou d'affichage du ou des facteur(s) de conformité dynamique déterminé(s). Cet enregistrement et/ou affichage peut être réalisé à bord du véhicule : sur le tableau de bord, sur un dispositif portatif autonome, tel qu'un appareil de géolocalisation (de type GPS), un téléphone portable (de type téléphone intelligent). Il est également possible d'enregistrer et d'afficher cet indicateur sur un site internet, que le conducteur peut consulter postérieurement à sa conduite. De plus, le ou les facteurs de conformité dynamique peuvent être partagés avec un organisme de contrôle des véhicules, de partage de voitures, de locations de voitures, un gestionnaire de flotte de véhicules, etc.

En outre, la présente invention concerne un procédé d'identification d'au moins un véhicule très polluant. Pour ce procédé, on met en oeuvre les étapes suivantes :

a) on met en oeuvre le procédé de détermination d'un facteur de conformité dynamique pour plusieurs cycles de roulage théoriques selon l'une quelconque des variantes ou des combinaisons de variantes décrites précédemment, pour une pluralité de véhicules ; et

b) on compare le facteur de conformité dynamique le plus élevé de chaque véhicule, et on en déduit le ou les véhicule(s) le(s) plus pollueur(s).

Ce procédé permet d'identifier le ou les véhicules les plus pollueur(s) parmi une flotte de véhicules. Cette identification peut alors permettre de sélectionner le ou les véhicule(s) pour lesquels des tests plus complets devront être réalisés (par exemple des tests de type PEMS), et ce qui permet d'éviter de faire des tests longs, onéreux et complexes pour des véhicules qui n'en ont pas besoin.

La figure 4 illustre, schématiquement et de manière non limitative, les étapes du procédé de détermination d'un facteur de conformité dynamique selon le deuxième mode de réalisation. Dans la partie basse de la figure est représentée la construction du modèle nominal MOD NOM, sur la base du modèle générique MOD GEN et d'un paramètre macroscopique (par exemple la norme d'homologation du véhicule). Tel que représenté, la construction du modèle nominal MOD NOM peut en outre prendre en compte le signal issu d'un capteur OBD. De la même manière que pour la figure 1, le modèle nominal MOD NOM permet de déterminer la quantité de $CO_2$ : $Q_{CO2\ est}$ en sortie du système de post-traitement. Cette donnée est utilisée avec la mesure Rmes issue du capteur CAP pour déterminer la quantité de polluant $Q_{pol\ mes}$ dans une étape de fusion (reconstruction) des données FUS. Les émissions polluantes en sortie du modèle nominal MOD NOM sont notées $Q_{pol\ nom}$ et sont ensuite comparées COMP avec la quantité de polluant $O_{pol\ mes}$ estimée au moyen du procédé de détermination des émissions polluantes selon l'invention pour déterminer le facteur de conformité dynamique CFD.

La figure 5 illustre, schématiquement et de manière non limitative, les étapes du procédé de détermination d'un facteur de conformité dynamique selon un troisième mode de réalisation. Pour ce mode de réalisation, on construit le modèle nominal MOD NOM de manière similaire à première variante de réalisation de la figure 4. En outre, on construit le modèle calé MOD CAL au moyen du modèle générique (non représenté) et des mesures (non représentées). Le modèle nominal MOD NOM permet de déterminer une quantité des émissions polluantes nominales $Q_{pol\ nom}$. Le modèle calé MOD CAL permet de déterminer une quantité des émissions polluantes calées $Q_{pol\ cal}$. On compare COMP ensuite ces deux quantités des émissions polluantes pour déterminer le facteur de conformité dynamique CFD.

**Exemple**

Les caractéristiques et avantages du procédé selon l'invention apparaîtront plus clairement à la lecture de l'exemple d'application ci-après.

L'exemple repose sur le test d'un véhicule de la norme Euro 6b. On applique le procédé de détermination d'un facteur de conformité dynamique pour un trajet d'environ 90 km parcouru par le véhicule. On détermine un facteur de conformité dynamique pour chaque segment de 10 km du trajet parcouru.

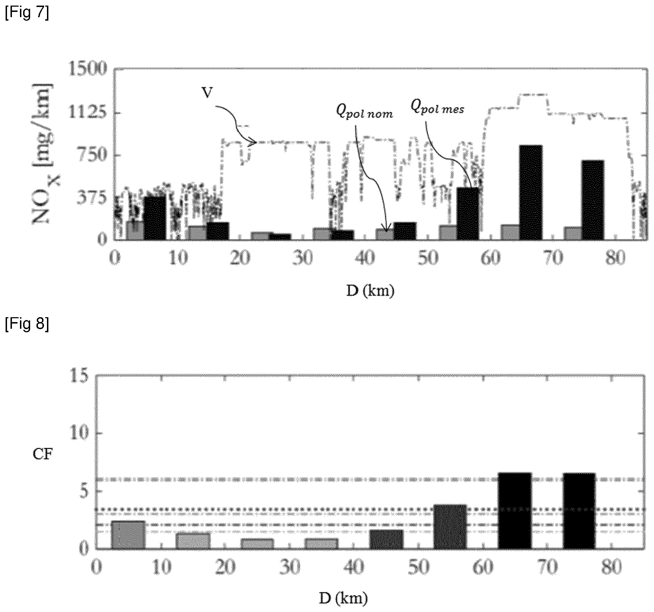

La figure 7 illustre le profil de la vitesse V en traits pointillés et les émissions de NOx estimées en (mg/km) en fonction de la distance parcourue D en km par le véhicule. Les émissions de NOx sont représentés par un histogramme : les rectangles en gris clair correspondent aux émissions de NOx estimées avec le modèle nominal $Q_{pol\ nom}$ et les rectangles en gris foncés correspondent aux émissions de NOx estimées avec le procédé de détermination des émissions polluantes selon le premier mode de réalisation de la figure 1 et notées $Q_{pol\ mes}$. Le profil de vitesse est varié : il comprend une première section de vitesse faible pouvant correspondre à un déplacement urbain (de 10 à 20 km), une deuxième section de vitesse moyenne pouvant correspondre à un déplacement extra-urbain (de 20 à 60 km) et une troisième section de vitesse élevée pouvant correspond à un déplacement sur autoroute (de 60 à 90 km). On remarque que les estimations de NOx diffèrent en fonction du modèle utilisé et de la vitesse du véhicule. On peut noter notamment que le véhicule a un démarrage à froid avec des émissions polluantes plus élevées que celles attendues $Q_{pol\ nom}$, que le véhicule a des émissions polluantes correspondant à celles attendues $Q_{pol\ nom}$ sur la deuxième section de trajet, et que le véhicule est défaillant en termes d'émissions polluantes pour la troisième section du trajet à vitesse élevée.

La figure 8 illustre un histogramme du facteur de conformité dynamique CF en fonction de la distance construit à partir des données de la figures 7. Le facteur de conformité dynamique CF est obtenu au moyen de la première variante de réalisation (cf. figure 4) par le ratio quantité de NOx estimées $Q_{pol\ mes}$ par rapport à la quantité de NOx estimée avec le modèle nominal $Q_{pol\ nom}$. Cet histogramme corrobore l'analyse de la figure 7 : le véhicule étudié est défaillant en termes d'émissions polluantes pour la troisième section du trajet à vitesse élevée.

**Revendications**

1. Procédé de détermination des émissions polluantes d'un véhicule ayant parcouru un trajet, ledit véhicule comportant un moteur à combustion interne et un système de post-traitement des gaz d'échappement dudit moteur, ledit procédé mettant en oeuvre un système embarqué de mesure comportant au moins un capteur (CAP) placé en aval dudit système de post-traitement et un système informatique (SIN) de détermination desdites émissions polluantes dudit véhicule au moyen de la mise en oeuvre d'un modèle générique (MOD GEN) dudit véhicule, **caractérisé en ce qu'**on met en oeuvre les étapes suivantes :

   a) On mesure au moyen dudit capteur (CAP) une concentration volumique desdites émissions polluantes (Rmes) en aval dudit système de post-traitement ;
   b) On estime au moyen dudit modèle générique dudit véhicule la consommation de carburant dudit véhicule ;
   c) On détermine le débit massique de dioxyde de carbone en aval dudit système de post-traitement à partir de ladite consommation de carburant estimée dudit moteur ; et
   d) On détermine les émissions polluantes $Q_{pol}$ en aval dudit système de post-traitement dudit véhicule à partir de ladite mesure de ladite concentration volumique desdites émissions polluantes et dudit débit massique de dioxyde de carbone déterminé.

2. Procédé de détermination des émissions polluantes selon la revendication 1, dans lequel on détermine les émissions polluantes dudit véhicule à partir d'une formule : $Q_{pol} = R_{mes} \times K \times Q_{CO2\_est}$ avec $Q_{pol}$ la quantité des émissions polluantes, $R_{mes}$ la concentration volumique mesurée desdites émissions polluantes, $K$ un coefficient basé sur le ratio des masses molaires dudit polluant considéré et du dioxyde de carbone, $Q_{CO2\_est}$ le débit massique estimé de dioxyde de carbone.

3. Procédé de détermination des émissions polluantes selon l'une des revendications précédentes, dans lequel ledit modèle générique dudit véhicule comporte un modèle du véhicule (MOD VEH), un modèle de la motorisation (MOD MOT) dudit véhicule et un modèle de post-traitement (MOD POT) dudit véhicule, ledit modèle de véhicule (MOT VEH) reliant ladite position et/ou l'altitude et/ou la vitesse dudit véhicule au couple et au régime dudit moteur, ledit modèle de motorisation (MOD MOT) reliant ledit couple et ledit régime dudit moteur aux émissions de polluants en sortie dudit moteur, et ledit modèle de post-traitement (MOD POT) reliant lesdites émissions de polluants en sortie dudit moteur aux émissions de polluants en sortie dudit système de post-traitement.

4. Procédé de détermination des émissions polluantes selon l'une des revendications précédentes, dans lequel ledit système embarqué comporte un capteur choisi parmi un capteur d'oxydes d'azote NOx, un capteur d'oxyde d'azote NO, un capteur de dioxyde d'azote $NO_2$, un capteur de monoxyde de carbone CO ou de dioxyde de carbone $CO_2$, un capteur de dioxygène $O_2$, un capteur d'hydrocarbures non brûlés, un capteur d'ammoniac $NH_3$, un capteur de particules.

5. Procédé de détermination des émissions polluantes selon l'une des revendications précédentes, dans lequel ledit système embarqué comporte un capteur branché sur une prise de diagnostic dudit véhicule (OBD), ledit au moins un capteur (CAP) communiquant avec ledit capteur branché sur la prise de diagnostic du véhicule (OBD) au moyen d'une connexion sans fil.

6. Procédé de détermination des émissions polluantes selon l'une des revendications précédentes, dans lequel ledit système informatique comporte au moins un téléphone intelligent, ledit au moins un capteur (CAP) communiquant avec ledit téléphone intelligent (TEL) au moyen d'une connexion sans fil.

7. Procédé de détermination des émissions polluantes selon l'une des revendications 5 ou 6, dans lequel ledit modèle générique dudit véhicule compris au sein dudit système informatique (SIN) est enregistré dans un nuage informatique (NUA), ledit téléphone intelligent (TEL) et/ou ledit capteur branché sur la prise de diagnostic dudit véhicule (OBD) étant configuré pour échanger avec ledit nuage informatique (NUA).

8. Procédé de détermination des émissions polluantes selon l'une des revendications précédentes, dans lequel ledit modèle générique dudit véhicule dépend en outre d'au moins un paramètre macroscopique (PAR) dudit véhicule, de préférence on acquiert ledit paramètre macroscopique à partir d'une base de données (BDD) et/ou au moyen d'une interface avec un utilisateur.

9. Procédé de détermination d'un facteur de conformité dynamique des émissions polluantes d'un véhicule au moyen dudit système embarqué de mesure, dans lequel on réalise les étapes suivantes :

   a) On détermine les émissions polluantes dudit véhicule au moyen du procédé de détermination des émissions polluantes selon l'une des revendications 1 à 8 ;
   b) On construit un modèle nominal (MOD NOM) dudit véhicule à partir d'au moins un paramètre macroscopique dudit véhicule au moyen d'un algorithme d'apprentissage automatique, ledit modèle nominal (MOD NOM) dudit véhicule correspond à un modèle théorique dudit modèle générique (MOD GEN) dudit véhicule ; et
   c) On détermine ledit facteur de conformité dynamique (CFD) par comparaison d'une valeur nominale des émissions polluantes $Q_{pol\,nom}$ déterminée au moyen du modèle nominal et d'une valeur $Q_{pol\,mes}$ des émissions polluantes déterminées à partir du procédé de détermination des émissions polluantes selon l'une des revendications 1 à 8.

10. Procédé de détermination d'un facteur de conformité dynamique des émissions polluantes d'un véhicule au moyen dudit système embarqué de mesure, dans lequel on réalise les étapes suivantes :

    a) On détermine les émissions polluantes dudit véhicule au moyen du procédé de détermination des émissions polluantes selon l'une des revendications 1 à 8 ;
    b) On construit un modèle nominal (MOD NOM) dudit véhicule à partir d'au moins un paramètre macroscopique dudit véhicule au moyen d'un algorithme d'apprentissage automatique, ledit modèle nominal (MOD NOM) dudit véhicule correspond à un modèle théorique dudit modèle générique (MOD GEN) dudit véhicule ; et
    c) On construit un modèle calé (MOD CAL) dudit véhicule à partir desdites émissions polluantes déterminées, de mesures dudit capteur (CAP) et de données issues dudit modèle générique (MOD GEN) dudit véhicule au moyen d'un algorithme d'apprentissage automatique, ledit modèle calé (MOD CAL) dudit véhicule correspond audit modèle générique (MOD GEN) dudit véhicule calé avec lesdites mesures dudit capteur (CAP) dudit système embarqué de mesure ;
    d) On détermine ledit facteur de conformité dynamique (CFD) par comparaison d'une estimation des émissions polluantes obtenues pour ledit modèle calé (MOD CAL) $Q_{pol\,cal}$ dudit véhicule et d'une estimation des émissions polluantes obtenues pour ledit modèle nominal (MOD NOM) $Q_{pol\,nom}$ dudit véhicule pour ledit trajet parcouru par ledit véhicule.

11. Procédé de détermination d'un facteur de conformité dynamique selon la revendication 9 ou 10, dans lequel on détermine un facteur de conformité dynamique (CFD) par comparaison des émissions polluantes mesurées par un autre système de mesure et des émissions polluantes estimées au moyen dudit modèle nominal (MOD NOM) dudit véhicule pour ledit trajet parcouru par ledit véhicule.

12. Procédé de détermination d'un facteur de conformité dynamique selon l'une des revendications 9 à 11, dans lequel ledit paramètre macroscopique utilisé pour la construction dudit modèle nominal comporte la norme d'homologation dudit véhicule.

13. Procédé de détermination d'un facteur de conformité dynamique selon l'une des revendications 9 à 12, dans lequel on détermine un facteur de conformité dynamique (CFD) par segment dudit trajet parcouru par ledit véhicule, notamment chaque segment de trajet a une longueur identique, de préférence la longueur dudit segment de trajet est compris entre 1 et 50 km.

**14.** Procédé de détermination d'un facteur de conformité dynamique selon l'une des revendications 9 à 13, dans lequel ledit procédé comporte une étape supplémentaire de détermination d'un facteur de conformité dynamique (CFD) pour un cycle de roulage théorique prédéterminé au moyen desdits modèles nominal (MOD NOM) et calé (MOD CAL) dudit véhicule.

**15.** Procédé de détermination d'un facteur de conformité dynamique selon la revendication 14, dans lequel on répète ladite étape supplémentaire de détermination dudit facteur de conformité (CFD) pour une pluralité de cycles de roulage théoriques prédéterminés, et on identifie le cycle de roulage ayant le facteur de conformité dynamique (CFD) le plus élevé.

**16.** Procédé d'identification d'au moins un véhicule le plus pollueur, dans lequel on met en oeuvre les étapes suivantes :

a) On met en oeuvre le procédé de détermination d'un facteur de conformité dynamique (CFD) selon la revendication 15 pour une pluralité de véhicules ; et
b) On compare le facteur de conformité dynamique (CFD) le plus élevé pour chaque véhicule pour déterminer ledit au moins un véhicule le plus pollueur.

## Patentansprüche

**1.** Verfahren zur Bestimmung von Schadstoffemissionen eines Fahrzeugs, das eine Strecke zurückgelegt hat, wobei das Fahrzeug einen Verbrennungsmotor und ein System zur Nachbehandlung der Abgase des Motors aufweist, wobei das Verfahren ein bordeigenes Messsystem verwendet, das wenigstens einen Sensor (CAP), der stromab des Nachbehandlungssystems platziert ist, und ein Datenverarbeitungssystem (SIN) zur Bestimmung der Schadstoffemissionen des Fahrzeugs durch die Verwendung eines generischen Modells (MOD GEN) des Fahrzeugs aufweist, **dadurch gekennzeichnet, dass** die folgenden Schritte durchgeführt werden:

a) Messen einer Volumenkonzentration der Schadstoffemissionen (Rmes) stromab des Nachbehandlungssystems mittels des Sensors (CAP);
b) Schätzen des Kraftstoffverbrauchs des Fahrzeugs mittels des generischen Modells des Fahrzeugs;
c) Bestimmen des Kohlendioxid-Massendurchsatzes stromab des Nachbehandlungssystems anhand des geschätzten Kraftstoffverbrauchs des Motors; und
d) Bestimmen der Schadstoffemissionen $Q_{pol}$ stromab des Nachbehandlungssystems des Fahrzeugs anhand der Messung der Volumenkonzentration der Schadstoffemissionen und des bestimmten Kohlendioxid-Massendurchsatzes.

**2.** Verfahren zur Bestimmung von Schadstoffemissionen nach Anspruch 1, wobei die Schadstoffemissionen des Fahrzeugs anhand einer Formel bestimmt werden: $Q_{pol} = R_{mes} \times K \times Q_{CO2\_est}$ wobei $Q_{pol}$ die Menge der Schadstoffemissionen ist, $R_{mes}$ die gemessene Volumenkonzentration der Schadstoffemissionen ist, K ein Koeffizient ist, der auf dem Verhältnis der molaren Massen des betreffenden Schadstoffs und des Kohlendioxids beruht, $Q_{CO2\_est}$ der geschätzte Massendurchsatz von Kohlendioxid ist.

**3.** Verfahren zur Bestimmung von Schadstoffemissionen nach einem der vorhergehenden Ansprüche, wobei das generische Modell des Fahrzeugs ein Modell des Fahrzeugs (MOD VEH), ein Modell der Motorisierung (MOD MOT) des Fahrzeugs und ein Nachbehandlungsmodell (MOD POT) des Fahrzeugs aufweist, wobei das Fahrzeugmodell (MOT VEH) die Position und/oder Höhe und/oder Geschwindigkeit des Fahrzeugs mit dem Drehmoment und der Drehzahl des Motors verbindet, wobei das Motorisierungsmodell (MOD MOT) das Drehmoment und die Drehzahl des Motors mit den Schadstoffemissionen am Ausgang des Motors verbindet, und das Nachbehandlungsmodell (MOD POT) die Schadstoffemissionen am Ausgang des Motors mit den Schadstoffemissionen am Ausgang des Nachbehandlungssystems verbindet.

**4.** Verfahren zur Bestimmung von Schadstoffemissionen nach einem der vorhergehenden Ansprüche, wobei das bordeigene System einen Sensor aufweist, der aus einem Stickoxid-, NOx-, Sensor, einem Stickoxid-, NO-, Sensor, einem Stickstoffdioxid-, $NO_2$-, Sensor, einem Kohlenmonoxid-, CO-, oder Kohlendioxid-, $CO_2$-, Sensor, einem Disau-

erstoff-, $O_2$-, Sensor, einem Sensor für unverbrannte Kohlenwasserstoffe, einem Ammoniak-, $NH_3$-, Sensor, einem Partikelsensor gewählt ist.

5. Verfahren zur Bestimmung von Schadstoffemissionen nach einem der vorhergehenden Ansprüche, wobei das bordeigene System einen Sensor aufweist, der an einen Diagnoseanschluss des Fahrzeugs (OBD) angeschlossen ist, wobei der wenigstens eine Sensor (CAP) mit dem Sensor, der an den Diagnoseanschluss des Fahrzeugs (OBD) angeschlossen ist, mittels einer Drahtlosverbindung kommuniziert.

6. Verfahren zur Bestimmung von Schadstoffemissionen nach einem der vorhergehenden Ansprüche, wobei das Datenverarbeitungssystem wenigstens ein Smartphone aufweist, wobei der wenigstens eine Sensor (CAP) mittels einer Drahtlosverbindung mit dem Smartphone (TEL) kommuniziert.

7. Verfahren zur Bestimmung von Schadstoffemissionen nach einem der Ansprüche 5 oder 6, wobei das generische Modell des Fahrzeugs, das im Datenverarbeitungssystem (SIN) enthalten ist, in einer Cloud (NUA) gespeichert ist, wobei das Smartphone (TEL) und/oder der Sensor, der an den Diagnoseanschluss des Fahrzeugs (OBD) angeschlossen ist, zum Austausch mit der Cloud (NUA) ausgebildet ist.

8. Verfahren zur Bestimmung von Schadstoffemissionen nach einem der vorhergehenden Ansprüche, wobei das generische Modell des Fahrzeugs ferner von wenigstens einem makroskopischen Parameter (PAR) des Fahrzeugs abhängt, der makroskopische Parameter vorzugsweise anhand einer Datenbank (BDD) und/oder mittels einer Schnittstelle zu einem Benutzer erfasst wird.

9. Verfahren zur Bestimmung eines dynamischen Übereinstimmungsfaktors der Schadstoffemissionen eines Fahrzeugs mittels des bordeigenen Messsystems, wobei die folgenden Schritte vorgenommen werden:

   a) Bestimmen der Schadstoffemissionen des Fahrzeugs mittels des Verfahrens zur Bestimmung von Schadstoffemissionen nach einem der Ansprüche 1 bis 8;
   b) Erstellen eines Nennmodells (MOD NOM) des Fahrzeugs anhand wenigstens eines makroskopischen Parameters des Fahrzeugs mittels eines Algorithmus für automatisches Lernen, wobei das Nennmodell (MOD NOM) des Fahrzeugs einem theoretischen Modell des generischen Modells (MOD GEN) des Fahrzeugs entspricht; und
   c) Bestimmen des dynamischen Übereinstimmungsfaktors (CFD) durch Vergleich eines Nennwerts der Schadstoffemissionen $Q_{pol\,nom}$, der mittels eines Nennmodells bestimmt wird, und eines Werts $Q_{pol\,mes}$ der Schadstoffemissionen, die anhand des Verfahrens zur Bestimmung von Schadstoffemissionen nach einem der Ansprüche 1 bis 8 bestimmt werden.

10. Verfahren zur Bestimmung eines dynamischen Übereinstimmungsfaktors der Schadstoffemissionen eines Fahrzeugs mittels des bordeigenen Messsystems, wobei die folgenden Schritte vorgenommen werden:

   a) Bestimmen der Schadstoffemissionen des Fahrzeugs mittels des Verfahrens zur Bestimmung von Schadstoffemissionen nach einem der Ansprüche 1 bis 8;
   b) Erstellen eines Nennmodells (MOD NOM) des Fahrzeugs anhand wenigstens eines makroskopischen Parameters des Fahrzeugs mittels eines Algorithmus für automatisches Lernen, wobei das Nennmodell (MOD NOM) des Fahrzeugs einem theoretischen Modell des generischen Modells (MOD GEN) des Fahrzeugs entspricht; und
   c) Erstellen eines kalibrierten Modells (MOD CAL) des Fahrzeugs anhand der bestimmten Schadstoffemissionen, von Messungen des Sensors (CAP) und Daten aus dem generischen Modell (MOD GEN) des Fahrzeugs mittels eines Algorithmus für automatisches Lernen, wobei das kalibrierte Modell (MOD CAL) des Fahrzeugs dem generischen Modell (MOD GEN) des Fahrzeugs entspricht, das mit den Messungen des Sensors (CAP) des bordeigenen Messsystems kalibriert ist;
   d) Bestimmen des dynamischen Übereinstimmungsfaktors (CFD) durch Vergleich einer Schätzung der Schadstoffemissionen, die für das kalibrierte Modell (MOD CAL) des Fahrzeugs erhalten wurden $Q_{pol\,cal}$ und einer Schätzung der Schadstoffemissionen, die für das Nennmodell (MOD NOM) des Fahrzeugs für die vom Fahrzeug zurückgelegte Strecke erhalten wurden $Q_{pol\,nom}$.

11. Verfahren zur Bestimmung eines dynamischen Übereinstimmungsfaktors nach Anspruch 9 oder 10, wobei ein dynamischer Übereinstimmungsfaktor (CFD) durch Vergleich der Schadstoffemissionen, die von einem anderen Messsystem gemessen werden, und der Schadstoffemissionen, die mittels des Nennmodells (MOD NOM) des Fahrzeugs für die vom Fahrzeug zurückgelegte Strecke geschätzt werden, bestimmt wird.

**12.** Verfahren zur Bestimmung eines dynamischen Übereinstimmungsfaktors nach einem der Ansprüche 9 bis 11, wobei der makroskopische Parameter, der zur Erstellung des Nennmodells genutzt wird, die Zulassungsnorm des Fahrzeugs umfasst.

**13.** Verfahren zur Bestimmung eines dynamischen Übereinstimmungsfaktors nach einem der Ansprüche 9 bis 12, wobei ein dynamischer Übereinstimmungsfaktor (CFD) pro Teilstück der vom Fahrzeug zurückgelegten Strecke bestimmt wird, insbesondere jedes Streckenteilstück eine identische Länge aufweist, vorzugsweise die Länge des Streckenteilstücks zwischen 1 und 50 km beträgt.

**14.** Verfahren zur Bestimmung eines dynamischen Übereinstimmungsfaktors nach einem der Ansprüche 9 bis 13, wobei das Verfahren einen zusätzlichen Schritt des Bestimmens eines dynamischen Übereinstimmungsfaktors (CFD) für einen vorbestimmten theoretischen Fahrzyklus mittels des Nennmodells (MOD NOM) und des kalibrierten Modells (MOD CAL) des Fahrzeugs aufweist.

**15.** Verfahren zur Bestimmung eines dynamischen Übereinstimmungsfaktors nach Anspruch 14, wobei der zusätzliche Schritt des Bestimmens des Übereinstimmungsfaktors (CFD) für eine Mehrzahl von vorbestimmten theoretischen Fahrzyklen wiederholt wird und der Fahrzyklus mit dem höchsten dynamischen Übereinstimmungsfaktor (CFD) ermittelt wird.

**16.** Verfahren zur Ermittlung wenigstens eines umweltschädlichsten Fahrzeugs, wobei die folgenden Schritte vorgenommen werden:

a) Durchführen des Verfahrens zur Bestimmung eines dynamischen Übereinstimmungsfaktors (CFD) nach Anspruch 15 für eine Mehrzahl von Fahrzeugen; und
b) Vergleichen des höchsten dynamischen Übereinstimmungsfaktors (CFD) für jedes Fahrzeug, um das wenigstens eine umweltschädlichste Fahrzeug zu bestimmen.

**Claims**

**1.** Method for determining the pollutant emissions of a vehicle that has covered a path, said vehicle comprising an internal combustion engine and a system for the post-treatment of the exhaust gases from said engine, said method implementing an onboard measurement system comprising at least one sensor (CAP) positioned downstream of said post-treatment system and a computer system (SIN) for determining said pollutant emissions of said vehicle by implementing a generic model (MOD GEN) of said vehicle, **characterized in that** the following steps are implemented:

a) a volumetric concentration of said pollutant emissions (Rmes) downstream of said post-treatment system is measured by means of said sensor (CAP);
b) the fuel consumption of said vehicle is estimated using said generic model of said vehicle;
c) the mass flow rate of carbon dioxide downstream of said post-treatment system is determined from said estimated fuel consumption of said engine; and
d) the pollutant emissions $Q_{pol}$ downstream of said post-treatment system of said vehicle are determined from said measurement of said volumetric concentration of said pollutant emissions and from said determined mass flow rate of carbon dioxide.

**2.** Method for determining pollutant emissions according to Claim 1, wherein the pollutant emissions of said vehicle are determined from a formula: $Q_{pol} = R_{mes} \times K \times Q_{CO2\_est}$, where $Q_{pol}$ is the quantity of pollutant emissions, $R_{mes}$ is the measured volumetric concentration of said pollutant emissions, K is a coefficient based on the ratio of the molar masses of said pollutant concerned and of carbon dioxide, and $Q_{CO2\_est}$ is the estimated mass flow rate of carbon dioxide.

**3.** Method for determining pollutant emissions according to one of the preceding claims, wherein said generic model of said vehicle comprises a model of the vehicle (MOD VEH), a model of the propulsion unit (MOD MOT) of said vehicle and a model of the post-treatment system (MOD POT) of said vehicle, said vehicle model (MOD VEH) linking said position and/or the altitude and/or the speed of said vehicle to the torque and to the engine speed of said engine, said propulsion-unit model (MOD MOT) linking said torque and said engine speed of said engine to the emissions of pollutants leaving said engine, and said post-treatment model (MOD POT) linking said emissions of pollutants leaving said engine to the emissions of pollutants leaving said post-treatment system.

4. Method for determining pollutant emissions according to one of the preceding claims, wherein said onboard system comprises a sensor selected from a nitrogen oxides $NO_x$ sensor, a nitrogen oxide NO sensor, a nitrogen dioxide $NO_2$ sensor, a carbon monoxide CO or carbon dioxide $CO_2$ sensor, a molecular-oxygen $O_2$ sensor, an unburnt hydrocarbons sensor, an ammonia $NH_3$ sensor and a particulate sensor.

5. Method for determining pollutant emissions according to one of the preceding claims, wherein said onboard system comprises a sensor connected to an onboard diagnostics connector (OBD) of said vehicle, said at least one sensor (CAP) communicating with said sensor connected to the vehicle onboard diagnostics connector (OBD) by means of a wireless connection.

6. Method for determining pollutant emissions according to one of the preceding claims, wherein said computer system comprises at least one smart phone, said at least one sensor (CAP) communicating with said smart phone (TEL) by means of a wireless connection.

7. Method for determining pollutant emissions according to one of Claims 5 and 6, wherein said generic model of said vehicle contained within said computer system (SIN) resides in a cloud (NUA), said smart phone (TEL) and/or said sensor connected to the vehicle onboard diagnostics connector (OBD) being configured to exchange with said cloud (NUA).

8. Method for determining pollutant emissions according to one of the preceding claims, wherein said generic model of said vehicle is also dependent on at least one macroscopic parameter (PAR) of said vehicle, and said macroscopic parameter is preferably acquired from a database (BDD) and/or by means of an interface with a user.

9. Method for determining a dynamic conformity factor for the pollutant emissions of a vehicle using said onboard measurement system, wherein the following steps are performed:

a) the pollutant emissions of said vehicle are determined by means of the method for determining pollutant emissions according to one of Claims 1 to 8;
b) a nominal model (MOD NOM) of said vehicle is constructed from at least one macroscopic parameter of said vehicle using a machine-learning algorithm, said nominal model (MOD NOM) of said vehicle corresponding to a theoretical model of said generic model (MOD GEN) of said vehicle; and
c) said dynamic conformity factor (CFD) is determined by comparing a nominal value of the pollutant emissions $Q_{pol\ nom}$, determined by means of the nominal model, against a value $Q_{pol}$ mes for the pollutant emissions determined from the method for determining pollutant emissions according to one of Claims 1 to 8.

10. Method for determining a dynamic conformity factor for the pollutant emissions of a vehicle by means of said onboard measurement system, wherein the following steps are performed:

a) the pollutant emissions of said vehicle are determined by means of the method for determining pollutant emissions according to one of Claims 1 to 8;
b) a nominal model (MOD NOM) of said vehicle is constructed from at least one macroscopic parameter of said vehicle using a machine-learning algorithm, said nominal model (MOD NOM) of said vehicle corresponding to a theoretical model of said generic model (MOD GEN) of said vehicle; and
c) a calibrated model (MOD CAL) of said vehicle is constructed from said determined pollutant emissions, from measurements from said sensor (CAP) and from data derived from said generic model (MOD GEN) of said vehicle, by means of a machine-learning algorithm, said calibrated model (MOD CAL) of said vehicle corresponding to said generic model (MOD GEN) of said vehicle calibrated using said measurements from said sensor (CAP) of said onboard measurement system;
d) said dynamic conformity factor (CFD) is determined by comparing an estimate of the pollutant emissions obtained for said calibrated model (MOD CAL) $Q_{pol\ cal}$ of said vehicle against an estimate of the pollutant emissions obtained for said nominal model (MOD NOM) $Q_{pol\ nom}$ of said vehicle for said path covered by said vehicle.

11. Method for determining a dynamic conformity factor according to Claim 9 or 10, wherein a dynamic conformity factor (CFD) is determined by comparing pollutant emissions measured by another measurement system against pollutant emissions estimated by means of said nominal model (MOD NOM) of said vehicle for said path covered by said vehicle.

12. Method for determining a dynamic conformity factor according to one of Claims 9 to 11, wherein said macroscopic parameter used for constructing said nominal model comprises the type-approval testing standard for said vehicle.

13. Method for determining a dynamic conformity factor according to one of Claims 9 to 12, wherein a dynamic conformity factor (CFD) is determined for each segment of said path covered by said vehicle, each path segment notably having an identical length, the length of said path segment preferably being comprised between 1 and 50 km.

14. Method for determining a dynamic conformity factor according to one of Claims 9 to 13, wherein said method comprises an additional step of determining a dynamic conformity factor (CFD) for a predetermined theoretical driving cycle, using said nominal model (MOD NOM) and calibrated model (MOD CAL) of said vehicle.

15. Method for determining a dynamic conformity factor according to Claim 14, wherein said additional step of determining said conformity factor (CFD) is repeated for a plurality of predetermined theoretical driving cycles, and the driving cycle that has the highest dynamic conformity factor (CFD) is identified.

16. Method for identifying at least one most-polluting vehicle, wherein the following steps are implemented:

a) the method for determining a dynamic conformity factor (CFD) according to Claim 15 is implemented for a plurality of vehicles; and
b) the highest dynamic conformity factor (CFD) for each vehicle are compared in order to determine said at least one most-polluting vehicle.

[Fig 1]

[Fig 2]

SIN

NUA

MOD GEN

MOD POT

MOD MOT

MOD VEH

TEL ou OBD

[Fig 3]

[Fig 4]

```
┌──────┐      Rmes                ┌──────┐
│ CAP  │──────────────────────────▶│      │
│      │                           │ FUS  │
└──────┘                           │      │        Q_pol mes
    │       OBD    ┌──────┐    ┌───▶│      │──────────────────────┐
    └─────────────▶│      │────┘    └──────┘                      │
                   │ MOD  │  Q_CO2 est                            ▼
                   │ NOM  │                              ┌──────┐
┌──────┐           │      │                              │      │  CFD
│ MOD  │──────────▶│      │──────────────────────────────▶│ COMP │─────▶
│ GEN  │           └──────┘         Q_pol nom             │      │
└──────┘                                                  └──────┘
```

$Q_{pol\,mes}$  $Q_{CO2\,est}$  $Q_{pol\,nom}$

[Fig 5]

```
┌──────┐           Q_pol cal
│ MOD  │──────────────────────────┐
│ CAL  │                          │
└──────┘                          ▼
                            ┌──────┐  CFD
┌──────┐                    │ COMP │─────▶
│ MOD  │──────────────────▶ │      │
│ NOM  │       Q_pol nom    └──────┘
└──────┘
```

$Q_{pol\,cal}$  $Q_{pol\,nom}$

[Fig 6]

```
┌──────┐
│ MOD  │───┐
│ GEN  │   │
└──────┘   ├──▶┌─────┐      ┌─────┐      ┌─────────┐
┌──────┐   │   │ CIB │─────▶│ CAL │─────▶│ MOD CAL │
│ CAP  │───┘   └─────┘      └─────┘      └─────────┘
└──────┘
```

[Fig 7]

[Fig 8]

## RÉFÉRENCES CITÉES DANS LA DESCRIPTION

**Documents brevets cités dans la description**

- FR 3049653
- WO 17174239 A
- FR 1851330
- DE 102007042784 A1
- FR 3059358 A1
- US 20190138669 A1
- US 20190102509 A1
- FR 2984557
- US 20130158967 A

**Littérature non-brevet citée dans la description**

- Modellbasiertes Werkzeug für die Emissionskalibrierung moderner Diesel-Antriebsstrânge. **DAVID BLANCO-RODRIGUEZ et al.** MTZ - MOTORTECHNISCHE ZEITSCHRIFT. Springer, vol. 77, 64-69